# EUROPEAN PATENT APPLICATION

(11) **EP 3 780 561 A1**
(43) Date of publication of application: **17.02.2021**
(21) Application number: 20775803.8
(22) Date of filing: 12.02.2020
(51) Int. Cl.: H04L 29/12

(54) **DOMAIN NAME CONFIGURATION AND DEPLOYMENT MANAGEMENT METHOD AND DEVICE**

(30) Priority: 12.06.2019 CN 201910504882
(71) Applicant: Wangsu Science & Technology Co., Ltd., Shanghai 200030 (CN)
(72) Inventor: DAI, Jianrong, Shanghai 200030 (CN)
(74) Representative: Würmser, Julian
(86) International application number: PCT/CN2020/074969
(87) International publication number: WO 2020/248613

(57) **Abstract**

Disclosed are a method and a device for managing domain name configuration deployment. The method includes: acquiring domain name configuration update information delivered from an upstream system (301), the domain name configuration update information including a first domain name to be updated; modifying a domain name state of the first domain name according to an update operation of the first domain name, and genearting a domain name configuration update task according to the domain name configuration update information and an agreed rule (302), and delivering the domain name configuration update task to an edge client, to enable the edge client to execute the domain name configuration update task and perform domain name configuration deployment (303). After receiving the domain name configuration update information, the domain name state is managed according to the update operation of the domain name, so that the state of the delivered domain name can be managed by a configuration delivering platform, avoiding the isolation of a subsequent domain name repair mechanism with the configuration delivering platform.

## Description

### CROSS REFERENCE TO RELATED APPLICATIONS

This application claims Chinese Patent Application No. 201910504882.8 titled "Method and Device for Managing Domain name Configuration Deployment", filed on June 12, 2019, the entire content of which are incorporated herein by reference.

### TECHNICAL FIELD

Embodiments of the present disclosure relate to the field of domain name management technologies, and particularly, to a method and a device for managing domain name configuration deployment.

### BACKGROUND

At present, large-scale internet companies usually need online clusters with a large number of servers that have multiple types and are distributed in a wide range. It is difficult to deliver configurations for such large-scale online clusters, especially for a solutoin of acceleration strategies for updating online corresponding domain names through domain name configuration, which needs to deliver and depoly the configurations to a large range of machines in a short time. However, at present, after the delivery of the domain name configuration is completed as a task, a subsequent domain name repair mechanism is isolated from the configuration delivering platform, and the delivered configurations cannot be managed through the configuration delivering platform.

### SUMMARY

Some embodiments of the present disclosure provide a method and a device for managing domain name configuration deployment, which are used for solving a problem that a domain name deployment task logic and a configuration repair logic are isolated and independent with each other, and enhancing management of online full-network domain name configuration deployment.

In one embodiment of the present disclosure, a method for managing domain name configuration deployment includes:
acquiring domain name configuration update information delivered from an upstream system, the domain name configuration update information including a first domain name to be updated;
modifying a domain name state of the first domain name according to an update operation of the first domain name, and genearting a domain name configuration update task according to the domain name configuration update information and an agreed rule; and
delivering the domain name configuration update task to an edge client, to enable the edge client to execute the domain name configuration update task and perform domain name configuration deployment.

In the foregoing technical solution, after receiving the domain name configuration update information, the domain name state is managed according to the update operation of the domain name, so that the state of the delivered domain name can be managed by a configuration delivering platform, avoiding the isolation of a subsequent domain name repair mechanism with the configuration delivering platform.

In one embodiment, the modifying the domain name state of the first domain name according to the update operation of the first domain name includes:
when the update operation of the first domain name is newly adding, newly adding the domain name state of the first domain name, and setting the domain name state of the first domain name as being newly added;
when the update operation of the first domain name is modifying, setting the domain name state of the first domain name as being modified; and
when the update operation of the first domain name is deleting, setting the domain name state of the first domain name as being deleted.

In the foregoing technical solution, the state of the first domain name can be managed by modifying a state of a corresponding domain name according to the update operation of the first domain name.

In one embodiment, after the delivering the domain name configuration update task to the edge client, the method further includes:
acquiring a deployment result fed back from each edge client;
if the deployment result is success, modifying the domain name state and a deployment result flag bit of the first domain name; and
determining a success rate of the domain name configuration update task according to the deployment result; if the success rate of the domain name configuration update task is greater than a threshold, feeding back a result that the domain name configuration update task is success to an upstream system, and setting a domain name deployment state as completed; otherwise, feeding a result that the domain name configuration update task is fail to the upstream system, and setting the domain name deployment as pending.

In the foregoing technical solution, the domain name state can be managed by modifying the corresponding domain name state according to the deployment result, and the domain name deployment state can also be managed.

In one embodiment, if the deployment result is success, the modifying the domain name state and the deployment result flag bit of the first domain name includes:
if the update operation of the first domain name is newly adding or modifying, setting the domain name state of the first domain name as completed; and
if the update operation of the first domain name is deleting, setting the domain name state of the first domain name as deleted.

In the foregoing technical solution, the domain name state of the first domain name can be further managed through the fed back deployment result, so that the current domain name state can be managed in real time.

In one embodiment, after the delivering the domain name configuration update task to the edge client, the method further includes:
receiving a repair result of the domain name configuration sent from the edge client; and
modifying the deployment result flag bit and recording repair times according to the repair result; and sending the repair result to the upstream system to enable the upstream system to modify an access list according to the repair result.

In the foregoing technical solution, the upstream system is enabled to modify the corresponding access list by modifying the result, thus avoiding access to the machine not repaired successfully of the edge client.

In one embodiment, the method further includes:
receiving a first deployment result sent from the edge client, the first deployment result being sent after the edge client successfully deploys domain name configuration for a newly installed machine or a faulty machine ;
adding a domain name state corresponding to the machine in the first deployment result and setting the domain name state as effective; and
sending the first deployment result to the upstream system.

In the foregoing technical solution, the domain name state of the newly installed machine can be managed by adding the domain name state corresponding to the machine in the first deployment result.

In one embodiment, the method further includes:
receiving machine removal information delivered from the upstream system; and
modifying a domain name state corresponding to the machine according to the machine removal information.

In the foregoing technical solution, the removal machine can be managed by modifying the domain name state of the corresponding machine according to the machine removal information delivered from the upstream system.

Accordingly, an embodiment of the present disclosure further provides a device for managing domain name configuration deployment, including:
an acquiring unit configured to acquire domain name configuration update information delivered from an upstream system, the domain name configuration update information including a first domain name to be updated; and
a processing unit configured to modify a domain name state of the first domain name according to an update operation of the first domain name, and generate a domain name configuration update task according to the domain name configuration update information and an agreed rule; and deliver the domain name configuration update task to an edge client, to enable the edge client to execute the domain name configuration update task and perform domain name configuration deployment.

In one embodiment, the processing unit is specifically configured to:
when the update operation of the first domain name is newly adding, newly add the domain name state of the first domain name, and set the domain name state of the first domain name as being newly added;
when the update operation of the first domain name is modifying, set the domain name state of the first domain name as being modified; and
when the update operation of the first domain name is deleting, set the domain name state of the first domain name as being deleted.

In one embodiment, the processing unit is further configured to:
acquire a deployment result fed back from each edge client, after the domain name configuration update task is delivered to the edge client;
modify the domain name state and a deployment result flag bit of the first domain name, if the deployment result is success; and
determine a success rate of the domain name configuration update task according to the deployment result; if the success rate of the domain name configuration update task is greater than a threshold, feed back a result that the domain name configuration update task is success to the upstream system, and set a domain name deployment state as completed; otherwise, feed a result that the domain name configuration update task is failto the upstream system, and set the domain name deployment as pending.

In one embodiment, the processing unit is specifically configured to:
set the domain name state of the first domain name as completed, if the update operation of the first domain name is newly adding or modifying; and
set the domain name state of the first domain name as deleted, if the update operation of the first domain name is deleting.

In one embodiment, the processing unit is also configured to:
receive a repair result of the domain name configuration sent from the edge client, after the domain name configuration update task is delivered to the edge client; and
modify the deployment result flag bit and record repair times according to the repair result; and send the repair result to the upstream system to enable the upstream system to modify an access list according to the repair result.

In one embodiment, the processing unit is further configured to:
receive a first deployment result sent from the edge client, the first deployment result being sent after the edge client successfully deploys domain name configuration for a newly installed machine or a faulty machine;
add a domain name state corresponding to the machine in the first deployment result and set the domain name state as effective; and
send the first deployment result to the upstream system.

In one embodiment, the processing unit is further configured to:
receive machine removal information delivered from the upstream system; and
modify a domain name state corresponding to the machine according to the machine removal information.

Accordingly, an embodiment of the present disclosure further provides a computing apparatus, including:
a memory configured to store program instructions; and
a processor configured to call the program instructions stored in the memory to execute the method for managing domain name configuration deployment above in accordance with the called program.

Accordingly, an embodiment of the present disclosure further provides a non-transitory computer readable storage medium including a computer readable instruction, when being read and executed by a computer, causing the computer to perform the method for managing domain name configuration deployment above,.

### BRIEF DESCRIPTION OF THE DRAWINGS

In order to illustrate the technical solutions in the embodiments of the present disclosure more clearly, the accompanying drawings used in the description of the embodiments will be briefly described below. Obviously, the accompanying drawings in the following description are merely some embodiments of the present disclosure. Those of ordinary skills in the art can also obtain other accompanying drawings according to these accompanying drawings without any creative work.
FIG. 1 is a block diagram of a system architecture provided by an embodiment of the present disclosure;
FIG. 2 is a block diagram of a system for managing domain name configuration deployment provided by an embodiment of the present disclosure;
FIG. 3 is a flow chart of a method for managing domain name configuration deployment provided by an embodiment of the present disclosure; and
FIG. 4 is a schematic structural diagram of a device for managing domain name configuration deployment provided by an embodiment of the present disclosure.

### DETAILED DESCRIPTION

To make the objectives, technical solutions, and advantages of the present disclosure clearer, the present disclosure will be described in detail below with reference to the accompanying drawings. Obviously, the embodiments described are merely a part of, rather than all of, the embodiments of the present disclosure. Based on the embodiments in the present disclosure, all other embodiments obtained by those of ordinary skills in the art without any creative work shall fall within the scope of protection of the present disclosure.

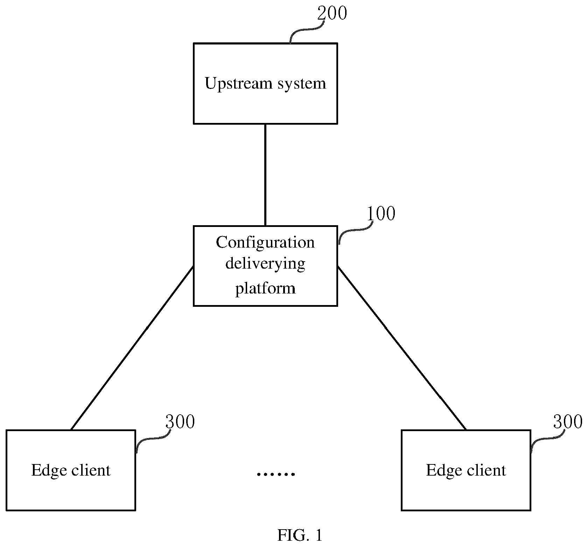

Fig. 1 exemplarily illustrates a system architecture applicable to the embodiments of the present disclosure. The system architecture may include a configuration delivering platform 100, an upstream system 200, and a plurality of edge clients 300. The upstream system 200 may deliver a domain name configuration to the plurality of edge clients 300 through the configuration delivering platform 100.

The configuration delivering platform 100, for instance, may be SCM (Software Configuration Management), which mainly generates a domain name configuration task after receiving configuration information to be modified sent from the upstream system 200 and sends the configuration information to be modified to the corresponding edge client 300.

The upstream system 200, such as a system for managing domain name configuration or a pipeline system, etc., is configured to receive domain name information configured by a user or an operating and maintaining personnel, and then send the domain name information to the configuration delivering platform 100.

The edge client 300 may complete domain name deployment according to the delivered domain name configuration information.

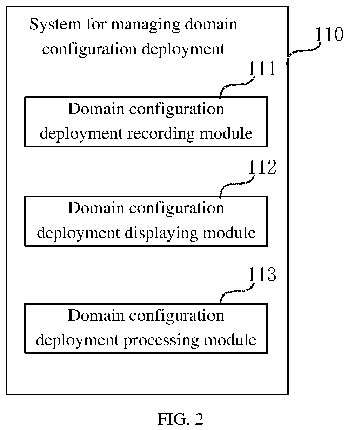

The above configuration delivering platform 100 may include a system for managing domain name configuration deployment 110. As shown in FIG. 2, the system for managing domain name configuration deployment 110 may consist of a domain name configuration deployment recording module 111, a domain name configuration deployment displaying module 112, and a domain name configuration deployment processing module 113. The domain name configuration deployment recording module 111 is configured to record online domain name configuration deployment and repair data, to provide a data base for a data processing module. The domain name configuration deployment displaying module 112 is configured to display deployment and repair situations of a deployment machine range corresponding to a current online domain name, and track machines that are unsuccessful to deploy and repair. The domain name configuration deployment processing module 113 is configured to receive feedback data of deployment and repair from the edge client 300, update online data according to the feedback data, and make a decision to notify the upstream system 200 of a real-time domain name deployment.

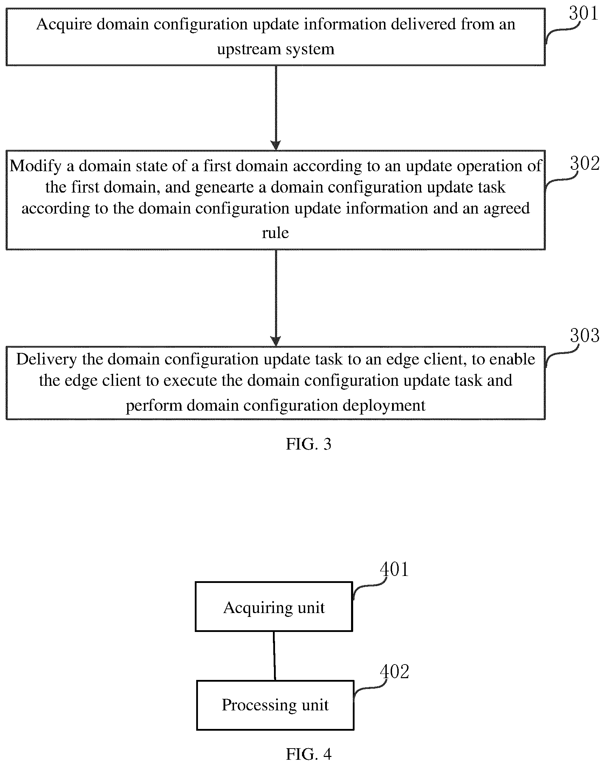

Based on the above description, FIG. 3 exemplarily illustrates a flow of a method for managing domain name configuration deployment provided by an embodiment of the present disclosure. The flow may be executed by a device for managing domain name configuration deployment, and the device may be located in the system 110 for managing domain name configuration deployment of the configuration delivering platform 100 as shown in FIG. 1, and may also be the system 110 for managing domain name configuration deployment of the configuration delivering platform 100.

As shown in FIG. 3, the flow specifically includes the following steps.

In step 301, domain name configuration update information delivered from an upstream system is acquired.

In the embodiment of the present disclosure, the domain name configuration update information includes a first domain name to be updated, wherein the update operation may be such operations as newly adding, modifying or deleting, etc.

When a customer or an operating and maintaining personnel configures contents to be updated on the upstream system, the contents to be updated are delivered to the configuration delivering platform, and thus the configuration delivering platform can receive the domain name configuration update information delivered from the upstream system.

In step 302, a domain name state of the first domain name is modified according to an update operation of the first domain name, and a domain name configuration update task is generated according to the domain name configuration update information and an agreed rule.

After the domain name configuration update information is received, whether the first domain name has been deployed can be determined, and corresponding domain name state information can be set. Specifically, when the update operation of the first domain name is newly adding, the domain name state of the first domain name is newly added, and the domain name state of the first domain name is set as being newly added. When the update operation of the first domain name is modifying, the domain name state of the first domain name is set as being modified. When the update operation of the first domain name is deleting, the domain name state of the first domain name is set as being deleted.

When generating the domain name configuration update task, the task information is mainly generated and a task package is packed according to the domain name configuration update information and the agreed rule, wherein the generated task information includes: key information including delivered application service group scope , related domain name service software, etc.

It should be noted that, the configuration delivering platform also needs to maintain an effective flag bit corresponding to the domain name configuration as a disabled bit while generating the above-mentioned domain name configuration update task, and synchronizes the same (i.e, the effective flag bit corresponding to the domain name configuration is a disabled bit) to edge machines of the whole internet to avoid conflicts between a deployment task and a repair task during task delivery.

In step 303, the domain name configuration update task is delivered to an edge client.

After the domain name configuration update task is generated, the domain name configuration update task can be delivered to the edge client, to enable the edge client to execute the domain name configuration update task and perform domain name configuration deployment.

For example, in the domain name information of the system for managing domain name configuration in an initial state, a domain name configuration state with a deployment record is completed, and a domain name without deployment has no records. When a CDN accelerated package configuration corresponding to the domain name is newly added or modified, the customer or the operation and maintenance personel configures a content to be modified, and then sends the content to be modified to the configuration delivering platform (referred to as SCM) for delivery. After receiving the task, the SCM generates task information and packs a task package according to the agreed rule, wherein the generated task information includes: key information including delivered application service group scope, related domain name service software, etc. Moreover, the SCM synchronizes the task information to the system for managing domain name configuration, and a module determines whether the domain name has been deployed. The domain name state deployed for the first time is newly added, and the domain name state deployed for an N^{th} times is being modified or deleted. Meanwhile, the SCM maintains an effective flag bit corresponding to the domain name configuration as a disabled bit and synchronizes the same (i.e, the effective flag bit corresponding to the domain name configuration is a disabled bit) to the edge machines of the whole internet to avoid the conflicts between the deployment task and the repair task during task delivery.

In step 303, after the domain name configuration update task is delivered to the edge client, it is also necessary to acquire a deployment result fed back from each edge client. If the deployment result is success, the domain name state and a deployment result flag bit of the first domain name are modified. A success rate of the domain name configuration update task is determined according to the deployment result. If the success rate of the domain name configuration update task is greater than a threshold, a result that-the domain name configuration update task is success-is fed back to the upstream system, and a domain name deployment state is set as completed; otherwise, a result that-the domain name configuration update task is fail-is fed back to the upstream system, and the domain name deployment is set as pending. The threshold can be set according to experience.

When the deployment result is success, the domain name state and the deployment result flag bit of the first domain name need to be modified. Specifically, the domain name state of the first domain name may be set as completed when the update operation of the first domain name is newly adding or modifying. When the update operation of the first domain name is deleting, the domain name state of the first domain name is set as deleted.

For example, SCM delivers the task to the edge client after relevant preparation work is completed, and the edge client executes the task to deploy the domain name configuration to a corresponding service software, and then feeds back the deployment result to the SCM platform. The SCM platform synchronizes the deployment result to the system for managing domain name configuration. If the deployment result is success, the corresponding machine deployment result flag is success, otherwise it is fail. The system for managing domain name configuration calculates whether a success rate reaches a threshold according to the deployment result fed back from the edge client. If the success rate reaches the threshold, the result that-the overall task deployment is success-is fed back to the upstream system. The SCM platform further updates a domain name configuration version maintained by the SCM to a new version, makes the corresponding effective flag bit to be effective and synchronizes the same (i.e., the domain name configuration version is the new version and the corresponding effective flag bit is effective) to the edge machines in the whole network. The unsuccessfully deployed machines begin to repair according to the new version identification; and the domain name deployment state in a domain name configuration management module is completed. If the success rate does not reach the threshold, the result that-the overall task deployment is fail-is fed back to the upstream system, and the upstream system judges whether a rollback configuration task needs to be delivered, and the domain name deployment state in the domain name configuration management module is pending. The SCM platform rolls back the domain name configuration version maintained by the SCM to the old version, makes the corresponding effective flag bit to be effective and synchronizes the same (i.e., the domain name configuration version is the old version and the corresponding effective flag bit is effective) to the edge machines in the whole network and the system for managing domain name configuration.

In the embodiment, after receiving the delivered domain name configuration update task, the edge client determines whether the received new version identification is consistent with a locally configured version identification. Machines with inconsistent versions begin to trigger repair. After trying to repair, the edge client determines whether the repair is successful. If the repair is successful, success information is fed back to the system for managing domain name configuration. Specifically, the system for managing domain name configuration may receive a domain name configuration repair result sent from the edge client, modify the deployment result flag bit and record repair times according to the repair result, and send the repair result to the upstream system so that the upstream system may modify an access list according to the repair result.

For instance, after receiving the new version identification, the edge client determines whether the new version identification is consistent with the locally configured identification. Machines with inconsistent versions begin to trigger repair, and the edge client determines whether the repair is successful after tried repair. If the repair is successful, the success information is fed back to the system for managing domain name configuration. The system for managing domain name configuration then updates the deployment information of the domain name corresponding to the machine, and updates the identification of fail to an identification of success, and records the repair times. If the repair is fail, an alarm message is generated and sent to a monitoring platform, and the fail information is fed back to the system for managing domain name configuration. The system for managing domain name configuration then records repair times, and update the fail information in the deployment state information of the domain name corresponding to the machine.

The system for managing domain name configuration feeds back the unsuccessfully repaired machines to the upstream system, and the upstream system determines to set the unsuccessfully repaired machines as invalidated in the access list according to the rules, so as to prevent the customer from accessing the unsuccessfully deployed machine to affect the service. The upstream system also adds the successfully repaired machines, which are fed back from the system for managing domain name configuration, to the access list to enhance the utilization of resources.

In the embodiment of the present disclosure, when a new machine is installed, a first deployment result sent from the edge client can also be received. The first deployment result is sent after the edge client successfully deployed domain name configuration of the new machine or a faulty machine. A domain name state corresponding to the machine in the first deployment result is added and set as effective, and the first deployment result is sent to the upstream system.

For example, when a new machine or a faulty machine in repair on the line relates to domain name configuration deployment, a TASK pipeline system deploys a full amount of domain name configuration task and then puts the machine in use. If the deployment succeeds, the client feeds back corresponding information to the system for managing domain name configuration, and the system adds the newly added machine information into effective information of a corresponding domain name and feeds back a domain name deployment result of the machine to the upstream system. If the deployment fails, the TASK pipeline system locates causes and performs the deployment again.

When the machine is removed from the line, machine removal information delivered from the upstream system may be received, and a domain name state corresponding to the machine is modified according to the machine removal information. The machine is mainly removed from the domain name list information in time by synchronizing APM/RMP information.

In conclusion, in the embodiment of the present disclosure, the domain name configuration deployment processing module in the system for managing domain name configuration deployment can provide a basis for displaying dynamic changes of the online domain name deployment and also provide the latest online domain name deployment in real time, so as to strengthen the control of the online service quality. Functions of the following three parts may be mainly included.

A first part refers to the processing of updating domain name configuration deployment information.

This part mainly refers to the update processing operations including newly adding, updating and deleting domain name configuration management information when deploying domain name configuration tasks. If the operation is newly adding, information of a relevant domain name is newly added, a domain name state of the newly adding process is marked as being newly added, a configuration state of a newly added domain name of a specific machine is dynamically updated until the deployment task is completed, then the newly added domain name state is changed to completed, and the latest data related to the domain name is synchronized to the upstream system. If the operation is updating, a domain name state of a relevant domain name is marked as being modified, a domain name configuration state of a specific machine is dynamically updated until the deployment task is completed, then the state of the modified domain name state is changed to completed, and the latest data related to the domain name is synchronized to the upstream system. If the operation is deleting, a domain name state of a relevant domain name is marked as being deleted until the deployment task is completed, and then the domain name state is set as deleted.

A second part refers to the processing of receiving feedback from the client.

This part mainly analyzes the information fed back from the edge client. The delivery of the domain name configuration may encounter unsuccessfully deployed machines, and these machines can be successfully deployed again in most cases. Therefore, results of configuration self-repair on the machine are also managed. The system receives the repair result of the edge client, determines and updates a domain name configuration management information logic.

If the feedback from the edge client is success, the deployment result of the failed machines in the domain name configuration management information is modified as success, and the latest repair times and update times are recorded.Then the successful machines are fed back to the upstream system in real time. If the feedback from the edge client is fail, the fail records of the machines are remain unchanged, but the repair times and update time are updated. Then the failed machines are fed back to the upstream system in real time. In the case that a stand-alone machine domain name is successfully deployed in full quantity for the newly installed machine, the result is fed back to the system for updating.

A third part refers to the processing of synchronizing the information to the upstream system.

The processing logic of this part is mainly intended to synchronize the specific deployment of the online domain name to the upstream system in real time, so that the upstream system can better know the deployment of the online domain name and provide a data base for high availability of services.

In the embodiment of the present disclosure, a domain name configuration deployment displaying module can provide convenience for relevant personnel to query the domain name deployment management. The displaying module mainly includes a query condition input section and an information display section. The query condition input section supports query by the following conditions: SCM deployment task ID, domain name, application service group, domain name state, IP deployment result state, start time and end time. A user may use the above conditions to filter and query, so as to conveniently locate abnormal machines and abnormal reasons. The corresponding data is also used for operation analysis. The information display section has a main layout and a pop-up window layout. The main layout displays domain name related information found by using the query conditions, and the specific machine deployment state information may be further displayed in a pop-up window by clicking on the domain name. The SCM platform may be linked to by clicking on the SCM deployment task ID to view deployment tasks, and specific management information of the domain name may be opened and viewed by clicking on the domain name.

In the embodiment of the present disclosure, a domain name configuration deployment recording module mainly records the following contents:
1) related contents recorded in a main page: SCM deployment task ID, version number, domain name, appellation service group, deployment start time, deployment end time, domain name state, and operating personnel; and
2) related contents recorded in a specific information page: machine IP, machine name, logical group, application service, deployment situation, update time, and repair times.

After the domain name configuration deployment processing module processes the data received from upstream and downstream, the recording module acquires and saves the relevant information into a database. For example, the relevant information includes: 1. the relevant management information (i.e. deployment information of the task) and update of a scope of deployment machines when the domain name configuration task is delivered; 2. an updated list of machines related to the domain name in real time according to online server information of APM/RMP, for improving a timeliness of information updating of the installed machines and the removed machines.

According to the foregoing embodiment, the domain name configuration update information delivered from the upstream system is acquired, the domain name configuration update information includes the first domain name to be updated. The domain name state of the first domain name is modified according to the update operation of the first domain name, and the domain name configuration update task is generated according to the domain name configuration update information and the agreed rule, and the domain nameupdate task is delivered to the edge client, to enable the edge client to execute the domain name configuration update task and perform the domain name configuration deployment. After receiving the domain name configuration update information, the domain name state is managed according to the update operation of the domain name, so that the configuration delivering platform can manage the state of the delivered domain name, avoiding the isolation of a subsequent domain name repair mechanism with the configuration delivering platform.

Based on the same technical concept, FIG. 4 exemplarily illustrates a structure of a device for managing domain name configuration deployment provided by an embodiment of the present disclosure. The device may execute a flow of managing domain name configuration deployment. The device may be located in the server 100 as shown in FIG. 1, and may also be the server 100.

As shown in FIG. 4, the device specifically includes:
an acquiring unit 401 configured to: acquire domain name configuration update information delivered from an upstream system, the domain name configuration update information including a first domain name to be updated; and
a processing unit 402 configured to: modify a domain name state of the first domain name according to an update operation of the first domain name, and generate a domain name configuration update task according to the domain name configuration update information and an agreed rule; and deliver the domain name configuration update task to an edge client, to enable the edge client to execute the domain name configuration update task and perform domain name configuration deployment.

In one embodiment, the processing unit 402 is specifically configured to:
when the update operation of the first domain name is newly adding, newly add the domain name state of the first domain name, and set the domain name state of the first domain name as being newly added;
when the update operation of the first domain name is modifying, set the domain name state of the first domain name as being modified; and
when the update operation of the first domain name is deleting, set the domain name state of the first domain name as being deleted.

In one embodiment, the processing unit 402 is also configured to:
acquire a deployment result fed back from each edge client, after delivering the domain name configuration update task to the edge client;
if the deployment result is success, modify the domain name state and a deployment result flag bit of the first domain name; and
determine a success rate of the domain name configuration update task according to the deployment result; if the success rate of the domain name configuration update task is greater than a threshold, feed back a result that the domain name configuration update task is success to the upstream system, and set a domain name deployment state as completed; otherwise, feed a result that the domain name configuration update task is fail to the upstream system, and set the domain name deployment as pending.

In one embodiment, the processing unit 402 is specifically configured to:
if the update operation of the first domain name is newly adding or modifying, set the domain name state of the first domain name as completed; and
if the update operation of the first domain name is deleting, set the domain name state of the first domain name as deleted.

In one embodiment, the processing unit 402 is also configured to:
receive a domain name configuration repair result sent from the edge client, after delivering the domain name configuration update task to the edge client,; and
modify the deployment result flag bit and record repair times according to the repair result; and send the repair result to the upstream system to enable the upstream system to modify an access list according to the repair result.

In one embodiment, the processing unit 402 is also configured to:
receive a first deployment result sent from the edge client, the first deployment result being sent after the edge client successfully deploys the domain name configuration for a newly installed machine or a faulty machine;
add a domain name state corresponding to the machine in the first deployment result and set the domain name state as effective; and
send the first deployment result to the upstream system.

In one embodiment, the processing unit 402 is also configured to:
receive machine removal information delivered from the upstream system; and
modify a domain name state corresponding to the machine according to the machine removal information.

Based on the same technical concept, an embodiment of the present disclosure further provides a computing apparatus, including:
a memory configured to storage program instructions; and
a processor configured to call the program instructions stored in the memory to execute the above method for managing domain name configuration deployment in accordance with a called program.

Based on the same technical concept, an embodiment of the present disclosure further provides a computer readable non-transitory storage medium including a computer readable instruction which, when read and executed by a computer, causes the computer to perform the above method for managing domain name configuration deployment.

The present disclosure is described with reference to the flow charts and/or block diagrams of the method, apparatus (system), and computer program products according to the embodiments of the present disclosure. It should be appreciated that each flow and/or block in the flow charts and/or block diagrams, and combinations of the flows and/or blocks in the flow charts and/or block diagrams may be implemented by computer program instructions. These computer program instructions may be provided to a general purpose computer, a special purpose computer, an embedded processor, or a processor of other programmable data processing apparatus to produce a machine , so that the computer or the processor of other programmable data processing apparatus executes the instructions to generate a device for implementing the functions specified in one or more flows of the flow chart and/or in one or more blocks of the block diagram.

These computer program instructions may also be stored in a computer readable memory that can guide the computer or other programmable data processing apparatus to work in a specific manner, so that the instructions stored in the computer readable memory generate a product including an instruction device. The instruction device implements the functions specified in one or more flows of the flow chart and/or in one or more blocks of the block diagram.

These computer program instructions may also be loaded to a computer, or other programmable data processing apparatus, so that a series of operating steps are executed on the computer, or other programmable data processing apparatus to produce processing implemented by the computer. Thus, the instructions executed by the computer or other programmable data processing apparatus provide steps for implementing the functions specified in one or more flows of the flow chart and/or in one or more blocks of the block diagram.

Although the preferred embodiments of the present disclosure have been described, those skilled in the art can make additional changes and modifications to these embodiments once they know the basic inventive concepts. Therefore, the appended claims are intended to be interpreted as including the preferred embodiments and all the changes and modifications that fall within the scope of the embodiments of the present disclosure.

Apparently, those skilled in the art can make various modifications and variations to the present disclosure without departing from the spirit and scope of the present disclosure. In this way, if these modifications and variations of the present disclosure are within the scope of the claims of the present disclosure and equivalent technologies thereof, the present disclosure is also intended to include these modifications and variations.

## Claims

1. A method for managing domain name configuration deployment, **characterized by** comprising:
acquiring domain name configuration update information delivered from an upstream system, the domain name configuration update information comprising a first domain name to be updated;
modifying a domain name state of the first domain name according to an update operation of the first domain name, and genearting a domain name configuration update task according to the domain name configuration update information and an agreed rule; and
delivering the domain name configuration update task to an edge client, to enable the edge client to execute the domain name configuration update task and perform domain name configuration deployment.

2. The method according to claim 1, wherein the modifying the domain name state of the first domain name according to the update operation of the first domain name comprises:
when the update operation of the first domain name is newly adding, newly adding the domain name state of the first domain name, and setting the domain name state of the first domain name as being newly added;
when the update operation of the first domain name is modifying, setting the domain name state of the first domain name as being modified; and
when the update operation of the first domain name is deleting, setting the domain name state of the first domain name as being deleted.

3. The method according to claim 2, wherein after the delivering the domain name configuration update task to the edge client, the method further comprises:
acquiring a deployment result fed back from each edge client;
if the deployment result is success, modifying the domain name state and a deployment result flag bit of the first domain name; and
determining a success rate of the domain name configuration update task according to the deployment result; if the success rate of the domain name configuration update task is greater than a threshold, feeding back a result that the domain name configuration update task is success to the upstream system, and setting a domain name deployment state as completed; otherwise, feeding a result that the domain name configuration update task is fail to the upstream system, and setting the domain name deployment as pending.

4. The method according to claim 3, wherein if the deployment result is success, the modifying the domain name state and the deployment result flag bit of the first domain name comprises:
if the update operation of the first domain name is newly adding or modifying, setting the domain name state of the first domain name as completed; and
if the update operation of the first domain name is deleting, setting the domain name state of the first domain name as deleted.

5. The method according to claim 2, wherein after the delivering the domain name configuration update task to the edge client, the method further comprises:
receiving a domain name configuration repair result sent from the edge client; and
modifying the deployment result flag bit and recording repair times according to the repair result; and sending the repair result to the upstream system to enable the upstream system to modify an access list according to the repair result.

6. The method according to claim 1, further comprising:
receiving a first deployment result sent from the edge client, the first deployment result being sent after the edge client successfully deploys domain name configuration for a newly installed machine or a faulty machine ;
adding a domain name state corresponding to the machine in the first deployment result and setting the domain name state as effective; and
sending the first deployment result to the upstream system.

7. The method according to any one of claims 1 to 4, further comprising:
receiving machine removal information delivered from the upstream system; and
modifying a domain name state corresponding to the machine according to the machine removal information.

8. A device for managing domain name configuration deployment, comprising:
an acquiring unit configured to: acquire domain name configuration update information delivered from an upstream system, the domain name configuration update information comprising a first domain name to be updated;
a processing unit configured to:
modify a domain name state of the first domain name according to an update operation of the first domain name, and generate a domain name configuration update task according to the domain name configuration update information and an agreed rule; and
deliver the domain name configuration update task to an edge client, to enable the edge client to execute the domain name configuration update task and perform domain name configuration deployment.

9. A computing apparatus, **characterized by** comprising:
a memory configured to storage program instructions; and
a processor configured to call the program instructions stored in the memory to execute the method according to any one of claims 1 to 7 in accordance with the called program.

10. A computer readable non-transitory storage medium, **characterized by** comprising a computer readable instruction that, when read and executed by a computer, causes the computer to perform the method according to any one of claims 1 to 7.
